# EUROPÄISCHE PATENTSCHRIFT

(11) **EP 2 082 924 B1**
(45) Veröffentlichungstag und Bekanntmachung des Hinweises auf die Patenterteilung: **03.11.2010**
(21) Anmeldenummer: 08001111.7
(22) Anmeldetag: 22.01.2008
(51) Int. Cl.: B60R 19/04

(54) **Stossfängerquerträger für Kraftfahrzeuge**
Bumper for motor vehicles
Traverse de pare-chocs pour véhicules automobiles

(43) Veröffentlichungstag der Anmeldung: 29.07.2009
(73) Patentinhaber: PEGUFORM GMBH, 79268 Bötzingen (DE)
(72) Erfinder: Löffler, Mike, 79115 Freiburg (DE)
(74) Vertreter: Neunert, Peter Andreas

(56) Entgegenhaltungen:
- EP-A- 0 611 682
- WO-A-2005/080141
- FR-A- 2 862 262
- US-A- 3 871 695
- US-A1- 2004 032 133
- US-A1- 2006 220 399

## Beschreibung

Die vorliegende Erfindung betrifft einen Stoßfängerquerträger für den Front- und/oder Heckbereich eines Kraftfahrzeuges mit den Merkmalen des Oberbegriffs des Anspruchs 1.

Ein solcher Stoßfängerquerträger ist im US 3 871 695 gezeigt.

Um die Kraft, die bei einem Zusammenstoß zweier Kraftfahrzeuge wirkt, in ausreichendem Maße aufnehmen zu können, ohne eine erhebliche Deformation beispielsweise des Fahrgastraums in Kauf nehmen zu müssen, sind im Front- und/oder Heckbereich des Kraftfahrzeugs Stoßfängersysteme in der Höhe der Längsträger des Kraftfahrzeugs angeordnet und mit diesen verbunden, um die Kraft über die Stoßfänger in die Längsträger einzuleiten. Da die Höhe der Kraftfahrzeuge heutzutage auch bei Personenkraftwagen erheblich variiert, kann bei einem Zusammenstoß zweier Kraftfahrzeuge der Fall auftreten, dass die Stoßfänger der beiden Fahrzeuge nicht aufeinander treffen und somit die Kraft nicht optimal in die Längsträger geleitet werden kann. Dies kann zu einer erheblichen Beschädigung des Fahrgastraums oder sonstiger funktioneller Bauteile im Front- oder Heckbereich des Fahrzeugs führen. Dadurch werden nicht nur die Insassen gefährdet, sondern es treten dann in der Regel auch erhebliche Sachschäden auf, die entsprechend hohe Reparaturkosten nach sich ziehen.

Zur Vermeidung dieses sogenannten "Overrides" oder "Underrides" werden im Stand der Technik unterschiedliche Maßnahmen vorgeschlagen, um die Beschädigung und damit die Reparaturkosten zu reduzieren. So wird in der DE 10 2004 050 435 A1 ein Stoßfängersystem für ein Kraftfahrzeug beschrieben, bei dem eine ausreichende Kompatibilität zwischen Kraftfahrzeugen unterschiedlicher Bauhöhe gewährleistet werden kann. Dazu werden bei einem Kraftfahrzeug in unterschiedlichen Höhen Ebenen für Kraftaufnahmeteile vorgesehen, auf die über ein Kraftverteilungselement die bei einem Aufprall einwirkende Kraft auf die unterschiedlichen Ebenen verteilt wird. Dabei werden als Kraftaufnahmeteile Bauteile eingesetzt, die mit der Karosserie des Kraftfahrzeugs starr verbunden sind oder ein Teil der Karosserie bilden. Diese Kraftaufnahmeteile sind mit Kraftverteilungselementen verbunden, die flächig ausgebildet sind und vor dem Stoßfängerquerträger im Frontbereich des Kraftfahrzeugs angeordnet sind. Die Kraftverteilungselemente sind meist aus Metall, vorzugsweise aus einem Stahl oder einer Aluminiumlegierung, hergestellt. Das gesamte System ist relativ aufwändig und es müssen zusätzliche relativ teure Bauteile im Frontbereich des Kraftfahrzeugs eingesetzt werden, wo sowieso schon viele funktionelle Elemente des Kraftfahrzeugs angeordnet sind und somit prinzipiell wenig Bauraum zur Verfügung steht.

In der US 70 66 525 B2 wird ein Stoßfängerquerträger in Form eines Schlüsselbeins beschrieben, der zwei äußere Bereiche und einen mittleren Bereich aufweist, wobei der mittlere Bereich in Fahrtrichtung nach vorne bzw. im Falle eines Stoßfängerquerträgers für den Heckbereich nach hinten verschoben ist. Diese Ausgestaltung des Stoßfängerquerträgers ist im wesentlichen dafür gedacht, bei einem Zusammenstoß den Kontakt zwischen den jeweiligen Stoßfängerquerträgern so früh wie möglich herzustellen, um dadurch die Energie des Aufpralls frühzeitig besser ableiten zu können. Dadurch, dass der Stoßfängerquerträger in seinem mittleren Bereich in Längsrichtung nach vorne verschoben ist, wird zwar auch für den Fall, dass die Bauhöhe der an dem Unfall beteiligten Kraftfahrzeuge unterschiedlich ist und beim Zusammenprall ein Unterfahren oder Überfahren des Stoßfängersystems stattfindet, möglicherweise das Ausmaß des Schadens reduziert, jedoch ist auch in diesem Fall immer noch mit erheblichen Schäden zu rechnen.

Es besteht somit weiterhin Bedarf an einem geeigneten Stoßfängerquerträger, der die Nachteile des Standes der Technik nicht aufweist und bei relativ geringem Material- und Platzaufwand im Crashfall einen optimierten Schutz auch bei dem Aufeinandertreffen von Kraftfahrzeugen mit unterschiedlichen Bauhöhen liefert.

Gelöst wird diese Aufgabe durch einen Stoßfängerquerträger mit den Merkmalen des Anspruchs 1. Vorteilhafte Ausführungsformen des erfindungsgemäßen Stoßfängerquerträgers sind in den Unteransprüchen wiedergegeben.

Im Rahmen der Einstufung von Kraftfahrzeugen in unterschiedliche Versicherungsklassen werden immer zahlreichere Crashtests durchgeführt, um das Ausmaß des zu erwartenden Schadens im Falle eines Unfalls abschätzen zu können. So werden bspw. bei dem sogenannten RCAR-Bumper-Test (RCAR = Research Council for Automobile Repairs) Mindestanforderungen an einen Stoßfängerquerträger gestellt, durch deren Erfüllung das Risiko eines Unter- oder Überfahren des Stoßfängersystems im Falle eines Unfalls vermieden bzw. gering gehalten werden soll, wodurch dann wiederum die Reparaturkosten entsprechend gesenkt werden sollen. Dieser Test ist so aufgebaut, dass das Kraftfahrzeug mit einer Fahrzeuggeschwindigkeit von 10.0 +/- 0.5 km/h mit seiner Front bzw. mit seinem Heck gegen eine an einer Wand fest installierte Prüfbarriere gefahren wird. Dabei ist die Prüfbarriere in einem definierten Abstand vom Boden installiert und besitzt eine Eigenhöhe von 100 mm. Eine Zulassungsbedingung für den RCAR-Bumper-Test besteht nun darin, dass der Querträger eine Höhe von mindestens 100 mm aufweist und eine Überdeckung des Querträgers mit der Prüfbarriere von mindestens 75 mm vorliegt.

Um bei vorgegebener Referenzhöhe der Prüfbarriere diesen Überdeckungsgrad zu erreichen und damit das ab 2010 geltende Kriterium für Neuzulassungen zu erfüllen, kann die Höhe des Stoßfängerquerträgers entsprechend heraufgesetzt werden. Dies führt jedoch in Abhängigkeit von der Bauhöhe des Fahrzeugs zu einer nicht unbeträchtlichen, unerwünschten Gewichtserhöhung.

Der vorliegenden Erfindung liegt nunmehr die Überlegung zugrunde, dass der Stoßfängerquerträger quer zur Fahrtrichtung üblicherweise in einer annähernd geraden Linie angeordnet ist und damit bei einem Frontalzusammenstoß der Kontakt zum gegnerischen Fahrzeug nahezu gleichzeitig über die gesamte Länge des Stoßfängerquerträgers erfolgt. Um die Kraft des Zusammenstoßes in die Längsträger einzuleiten und damit mögliche Beschädigungen des Fahrgastraumes oder der funktionellen Bauteile im Front- oder Heckbereich gering zu halten, sollte es jedoch ausreichen, wenn die Stoßfängerquerträger der gegnerischen Fahrzeuge in einem Teilbereich der Breite der Fahrzeugfront bzw. des Hecks zusammentreffen. Wenn ein Stoßfängerquerträger nun über seine Länge unterschiedliche Bauhöhen aufweist, kann damit bei einem Frontalzusammenstoß mit einem gegnerischen Fahrzeug ein hoher Überdeckungsgrad der jeweiligen Stoßfängerquerträger erreicht werden, ohne durch eine generelle Erhöhung des Querschnitts das Gewicht des Stoßfängerquerträgers stark heraufzusetzen.

Die vorliegende Erfindung sieht somit vor, einen Stoßfängerquerträger für ein Kraftfahrzeug einzusetzen, der über seine Länge bzw. die Breite des Fahrzeugs insgesamt drei Abschnitte aufweist, von denen die beiden äußeren Abschnitte gleichartig gestaltet sind, während der mittlere Abschnitt gegenüber den beiden äußeren Abschnitten vertikal verschoben ist. Durch die vertikale Verschiebung des mittleren Abschnitts des Stoßfängerquerträgers gewinnt der Stoßfängerquerträger in Bezug auf seine gesamte Länge bzw. die gesamte Breite des Fahrzeugs an Bauhöhe in Z-Richtung. Bei einem Frontalzusammenstoß, bei dem sich die Stoßfängerquerträger in der Regel über die gesamte Fahrzeugbreite einander annähern, wird damit die Wahrscheinlichkeit des Zusammentreffens auch bei unterschiedlichen Bauhöhen der Fahrzeuge selber wesentlich erhöht.

Die Erfindung sieht vor, einen Stoßfängerquerträger einzusetzen, der eine über seine Länge im Wesentlichen konstante Querschnittshöhe aufweist, die sich über eine Vertikalverschiebung auch in seinem mittleren Bereich fortsetzt. Dies führt dazu, dass selbst mit relativ geringen generellen Querschnittshöhen des Stoßfängerquerträgers die Überdeckungsanforderungen für einen Crash erfüllt werden können. Eine geringe Querschnittshöhe hat dabei den Vorteil, dass es zu beträchtlichen Gewichtseinsparungen im Vergleich zu einem Standardquerträger kommt.

Die Vertikalverschiebung des mittleren Abschnitts des Stoßfängerquerträgers kann je nach vorgegebenem Design bzw. Bauhöhe des Kraftfahrzeugs nach unten oder nach oben gerichtet sein.

Eine vorteilhafte Ausgestaltung des Stoßfängerquerträgers sieht vor, dass der mittlere Abschnitt vertikal nach oben oder unten verschoben ist, womit ein "Underride" oder Unterfahren bzw. ein "Override" oder Überfahren des gegnerischen Kraftfahrzeugs verhindert wird.

Im Übergangsbereich zwischen den äußeren Abschnitten und dem mittleren Abschnitt hat der Stoßfängerquerträger die Form einer vertikal verschobenen S-Kurve. Eine vorteilhafte Ausführungsform sieht vor, dass die beiden äußeren Abschnitte und der mittlere Abschnitt des Stoßfängerquerträgers in etwa gleich lang ausgebildet sind, sodass die zusätzliche Bauhöhe in Z-Richtung durch den S-förmigen Übergangsbereich und die Vertikalverschiebung etwa nach dem ersten Drittel des Querträgers gewonnen wird. Damit ist gewährleistet, dass die zusätzliche Bauhöhe unabhängig vom Aufprallwinkel bei fast allen Crashs im Front- oder Heckbereich des Fahrzeugs zum Tragen kommt. Neben diesen beiden oben geschilderten Ausführungen des Übergangsbereichs und des Längenverhältnisses der jeweiligen Abschnitte des Stoßfängerquerträgers sind sämtliche geometrisch sinnvollen Ausführungsvarianten möglich, die sich prinzipiell aus der jeweiligen Bauart des Kraftfahrzeugs ergeben.

Bei der vorliegenden Erfindung sind an den äußeren Abschnitten des Stoßfängerquerträgers Befestigungsvorrichtungen vorgesehen, mit denen der Stoßfängerquerträger an den Längsträgern des Kraftfahrzeugs befestigt wird. Diese Befestigungsvorrichtungen sind als sogenannte Crashboxen ausgeführt, die dazu dienen, gleichzeitig zumindest einen Teil der Aufprallenergie zu absorbieren.

Eine bevorzugte Ausführungsform des erfindungsgemäßen Stoßfängerquerträgers sieht vor, dass die Querschnittshöhe des Querträgers in Anlehnung an den oben genannten RCAR-Bumper-Test ca. 100 mm beträgt. Durch Variation der Vertikalverschiebung kann problemlos unabhängig von den Designvorgaben für das Kraftfahrzeug ein Überdeckungsgrad von größer als 75 mm erreicht werden.

Als Material für den Stoßfängerquerträger können sämtliche für diese Bauteile üblichen Materialien, wie zum Beispiel Kunststoffe, faserverstärkte Kunststoffe, Verbundmaterialien oder Metalle, eingesetzt werden.

Im folgenden wird die Erfindung anhand von Zeichnungen ausführlich erläutert, die unterschiedliche Ausführungsformen gattungsgemäßer Stoßfängerquerträger in der Vorderansicht zeigen. Dabei zeigen:
- Figur 1: einen konventionellen Stoßfängerquerträger als Vergleichsbeispiel,
- Figur 2: eine erste Ausführungsform eines erfindungsgemä- ßen Stoßfängerquerträgers mit einer Vertikalver- schiebung nach oben,
- Figur 3: eine analoge Ausführungsform wie in Figur 1, je- doch mit einer Vertikalverschiebung nach unten,
- Figur 4: ein nich erfindungsgemäßer Stoßfänger mit einer Vertikalverbreiterung nach oben,
- Figur 5: eine analoge Ausführungsform wie in Figur 4, je- doch mit einer Vertikalverbreiterung nach unten, und
- Figur 6: ein nicht erfindungsge- mäßer Stoßfänger mit einer Verbreiterung des Stoßfängerquerschnitts in beide Vertikalrichtun- gen.

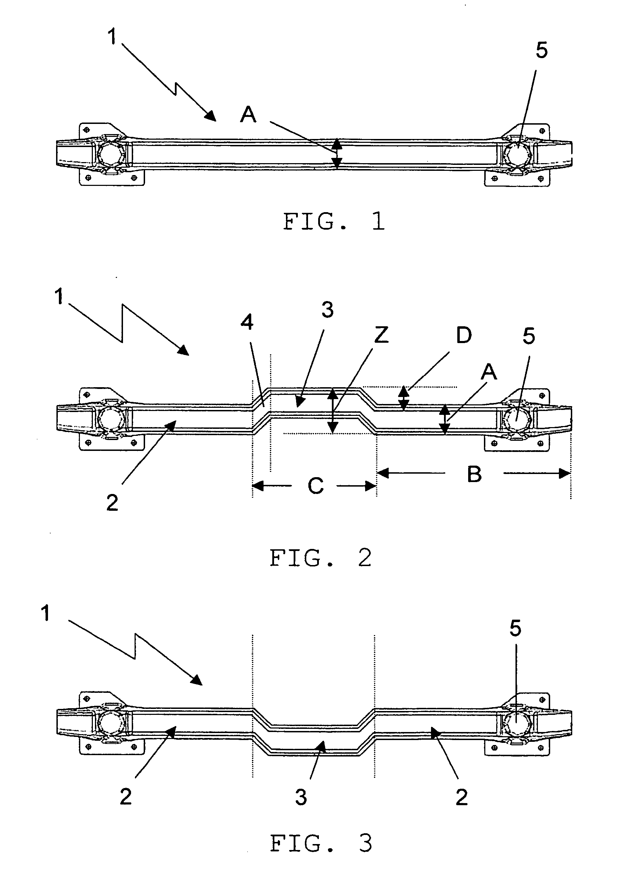

Die Figur 1 zeigt als Vergleich in der Vorderansicht einen konventionellen Stoßfängerquerträger 1 in einer linearen Ausführung mit einer über die gesamte Länge unveränderten Querschnittshöhe (A). In den seitlichen Abschnitten sind Befestigungsvorrichtungen 5 zu sehen, über die der Stoßfängerquerträger mit den Längsträgern der Fahrzeugkarosserie verbunden ist.

Die Figur 2 zeigt ebenfalls in der Vorderansicht einen erfindungsgemäßen Stoßfängerquerträgers 1. Der Stoßfängerquerträger 1, der eine über seine Länge im Wesentlichen konstante Querschnitthöhe (A) besitzt, ist im Wesentlichen aus insgesamt drei Teilbereichen 2, 3 aufgebaut, die sich aus zwei gleichartigen äußeren Abschnitten 2 und einem von den äußeren Abschnitten 2 unterschiedlichen mittleren Abschnitt 3 zusammensetzen. Der mittlere Abschnitt 3 ist gegenüber den äußeren Abschnitten 2 vertikal nach oben verschoben, wobei die Vertikalverschiebung (D) im vorliegenden Fall in etwa der Querschnittshöhe (A) des Stoßfängerquerträgers 1 entspricht. Durch die Vertikalverschiebung (D) erhöht sich die Überlappungsbereich des Stoßfängerquerträgers (1) von der Querschnittshöhe (A) auf die Bauhöhe (Z). Der Übergangsbereich 4 zwischen den jeweils äußeren Abschnitten 2 und dem mittleren Abschnitt 3 hat die Form einer vertikal verschobenen S-Kurve, wobei dieser Übergangsbereich 4 eine im Vergleich zu den Längsausdehnungen B und C der Abschnitte 2, 3 relativ geringe Abmessung aufweist. Die beiden äußeren Abschnitte 2 und der mittlere Abschnitt 3 besitzen in diesem speziellen Fall eine etwa vergleichbare Längsausdehnung B und C, die so ausgelegt ist, dass nach etwa einem Drittel der Länge des Stoßfängerquerträgers 1 die erhöhte Bauhöhe (Z) des Stoßfängerquerträgers 1 zum Tragen kommt. An den äußeren Abschnitten 2 ist jeweils eine Befestigungsvorrichtung 5 zur Befestigung des Stoßfängerquerträgers 1 an einem Längsträger des Kraftfahrzeugs vorgesehen. Üblicherweise handelt es sich bei der Befestigungsvorrichtung 5 um eine Crashbox.

Die Figur 3 zeigt eine zu der in Figur 1 gezeigten Ausführungsform analoge Variante des erfindungsgemäßen Stoßfängerquerträgers 1, bei der ebenfalls die Querschnittshöhe (A) des Stoßfängerquerträgers 1 unverändert bleibt. Im Gegensatz zur Figur 1 ist der mittlere Abschnitt 3 jetzt jedoch vertikal nach unten verschoben.

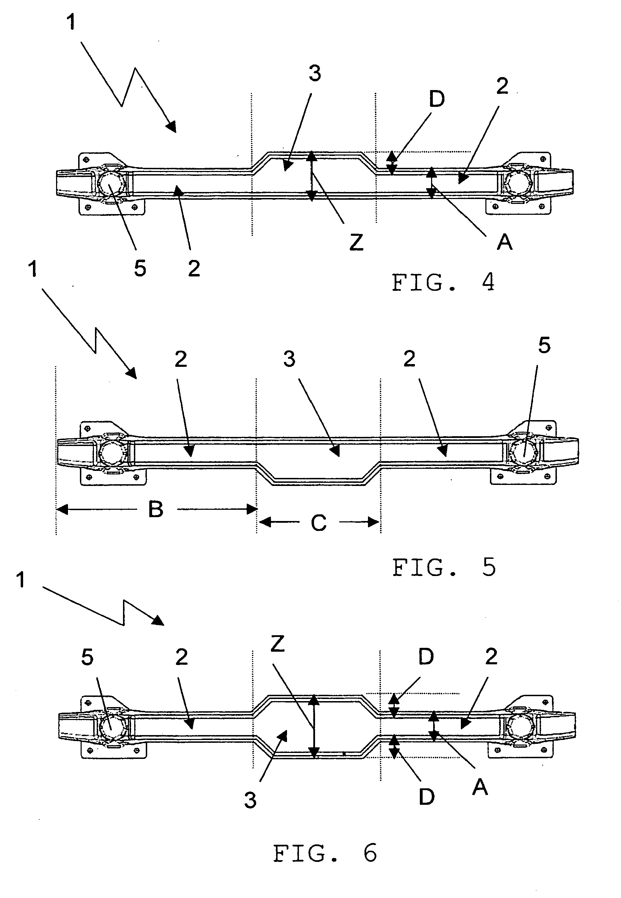

Die Figur 4 zeigt eine weitere Ausführungsform des erfindungsgemäßen Stoßfängerquerträgers 1, bei der die lineare Grundform des Stoßfängerquerträgers 1 erhalten bleibt, während der mittlere Abschnitt 3 vertikal verbreitert ist. In diesem Fall erhöht sich die Querschnittshöhe (A) des Stoßfängerquerträgers 1 im mittleren Bereich 3 um die Vertikalverschiebung (D) und entspricht damit der erhöhten Bauhöhe (Z) des Stoßfängerquerträgers 1, während in den seitlichen Abschnitten 2 die ursprüngliche Querschnittshöhe (A) erhalten bleibt. Bei dieser Ausführungsform ist eine optimale Kraftübertragung über die Befestigungsvorrichtungen 5 auf die Längsträger der Fahrzeugkarosserie gewährleistet.

Die Figur 5 zeigt eine zu der in Figur gezeigten Ausführung analoge Variante des Stoßfängerquerträgers 1, bei der die Verbreiterung des mittleren Abschnitts 3 vertikal nach unten stattfindet.

Die in Figur 6 dargestellte Ausgestaltung ist in gewisser Weise eine Sonderform, da in diesem Fall der mittlere Abschnitt 3 in beide Vertikalrichtungen verbreitert ist. Damit ergibt sich eine doppelte Vertikalverschiebung (D), die in einem mittleren Abschnitt 3 mit einer stark erhöhten Bauhöhe (Z) des Stoßfängerquerträgers 1 resultiert.

### Bezugszeichenliste

- 1: Stoßfängerquerträger
- 2: äußerer Abschnitt
- 3: mittlerer Abschnitt
- 4: Übergangsbereich
- 5: Befestigungsvorrichtung
- A: Querschnittshöhe
- B: Länge äußerer Abschnitt
- C: Länge mittlerer Abschnitt
- D: Vertikalverschiebung
- Z: Bauhöhe

## Patentansprüche

1. Stoßfängerquerträger (1) für ein Kraftfahrzeug mit
- zwei gleichartigen äußeren Abschnitten (2) und
- einem von den äußeren Abschnitten (2) sich unterscheidenden mittleren Abschnitt (3), wobei
der mittlere Abschnitt (3) gegenüber den beiden äußeren Abschnitten (2) vertikal nach oben oder unten verschoben ist, wobei
der Stoßfängerguerträger eine über seine Länge im Wesentlichen konstante Querschnittshöhe (A)
und
jeweils im Übergangsbereich (4) von einem äußeren Abschnitt (2) zum mittleren Abschnitt (3) die Form einer vertikal verschobenen S-Kurve aufweist, wobei
die äußeren Abschnitte (2) des Stoßfängerquerträgers (1) jeweils eine Befestigungsvorrichtung (5) zur Befestigung des Stoßfängerquerträgers (1) an den Längsträgern des Kraftfahrzeugs aufweisen, **dadurch gekennzeichnet, daß** diese Befestigungsvorrichtungen als crashbox ausgebildet sind.

2. Stoßfängerquerträger nach Anspruch 1,
**dadurch gekennzeichnet, dass**
die beiden äußeren Abschnitte (2) und der mittlere Abschnitt (3) in etwa gleich lang ausgebildet sind, so dass etwa nach dem ersten Drittel des Querträgers (1) durch die Vertikalverschiebung (D) im S-förmigen Übergangsbereich (4) zusätzliche Bauhöhe in Z-Richtung ausgebildet ist.

3. Stoßfängerquerträger nach Anspruch 1 oder 2,
**dadurch gekennzeichnet, dass**
die Vertikalverschiebung (D) in etwa der Querschnittshöhe (A) des Stoßfängerquerträgers (1) entspricht.

## Claims

1. A bumper cross member (1) for a motor vehicle with
- two similar outer portions (2) and
- a middle portion (3) different from the outer portions (2), wherein
the middle portion (3) is displaced vertically upwards or downwards with respect to the two outer portions (2), wherein
the bumper cross member has a cross-sectional height (A) which is substantially constant over the length thereof, and
has the shape of a vertically displaced S-curve in the transition region (4) from one outer portion (2) to the middle portion (3) in each case, wherein
the outer portions (2) of the bumper cross member (1) have in each case one fastening device (5) for fastening the bumper cross member (1) to the longitudinal members of the motor vehicle, **characterized in that** these fastening devices are designed in the form of a crash box.

2. A bumper cross member according to claim 1, **characterized in that** the two outer portions (2) and the middle portion (3) are designed to be substantially equal in length, so that approximately after the first third of the cross member (1) additional structural height is formed in the Z direction by the vertical displacement (D) in the S-shaped transition region (4).

3. A bumper cross member according to claim 1 or 2, **characterized in that** the vertical displacement (D) corresponds substantially to the cross-sectional height (A) of the bumper cross member (1).

## Revendications

1. Traverse de pare-chocs (1) de véhicule automobile comportant :
- deux segments extérieurs (2) analogues, et
- un segment médian (3) différent des segments extérieurs (2), dans lequel
- le segment médian (3) est décalé verticalement vers le haut ou vers le bas par rapport aux deux segments extérieurs (2),
- la traverse présente une hauteur de section (A) pratiquement constante suivant sa longueur, et
- chaque fois dans la zone de transition (4) entre un segment extérieur (2) et le segment médian (3), on a la forme d'une courbe en S décalée verticalement,
- les segments extérieurs (2) de la traverse de pare-chocs (1) comportent respectivement un dispositif de fixation (5) pour fixer la traverse de pare-chocs (1) sur les poutres longitudinales du véhicule automobile,
traverse **caractérisée en ce que**
ces dispositifs de fixation sont réalisés sous la forme de boîtes de collision.

2. Traverse de pare-chocs selon la revendication 1,
**caractérisée en ce que**
les deux segments extérieurs (2) et le segment médian (3) ont sensiblement la même longueur de sorte que sensiblement après le premier tiers de la traverse (1) par le coulissement vertical (D) dans la zone transitoire en forme de S, on a réalisé une hauteur de construction supplémentaire dans la direction Z.

3. Traverse de pare-chocs selon la revendication 1 ou 2,
**caractérisée en ce que**
le coulissement vertical (D) correspond sensiblement à la hauteur de la section (A) de la traverse pare-chocs (1).
